# EUROPÄISCHE PATENTSCHRIFT

(11) **EP 3 350 429 B1**
(45) Veröffentlichungstag und Bekanntmachung des Hinweises auf die Patenterteilung: **24.02.2021**
(21) Anmeldenummer: 16753842.0
(22) Anmeldetag: 28.07.2016
(51) Int. Cl.: F01N 3/20, F01N 11/00, B60K 15/03, B60K 15/035, B60K 15/04

(54) **BETRIEBSFLÜSSIGKEITSBEHÄLTERSYSTEM FÜR KRAFTFAHRZEUGE MIT VERBESSERTEM FEHLBETANKUNGSSCHUTZ**
OPERATING LIQUID CONTAINER SYSTEM FOR MOTOR VEHICLES WITH IMPROVED MISFUELLING PROTECTION
SYSTÈME DE RÉSERVOIR DE FLUIDE DE FONCTIONNEMENT POUR VÉHICULES AUTOMOBILES DOTÉ D'UNE PROTECTION AMÉLIORÉE CONTRE LES ERREURS DE REMPLISSAGE

(30) Priorität: 15.09.2015 DE 102015217613
(43) Veröffentlichungstag der Anmeldung: 25.07.2018
(73) Patentinhaber: Kautex Textron GmbH & Co. KG, 53229 Bonn (DE)
(72) Erfinder: EULITZ, Dirk, 53115 Bonn (DE); WOLF, Hartmut, 53639 Königswinter (DE); OSSEGE, Theodor, 53619 Rheinbreitbach (DE); GEBERT, Klaus, 47877 Willich (DE); KARSCH, Ulrich, 53859 Niederkassel (DE); ERBEN, Christian, 47626 Kevelaer (DE)
(74) Vertreter: Richly & Ritschel Patentanwälte PartG mbB
(86) Internationale Anmeldenummer: PCT/EP2016/068100
(87) Internationale Veröffentlichungsnummer: WO 2017/045822

(56) Entgegenhaltungen:
- EP-A1- 0 816 284
- EP-A2- 1 103 794
- EP-A2- 2 172 630
- WO-A1-2015/075244
- DE-A1- 3 343 432
- DE-A1-102010 020 581
- DE-A1-102011 108 333
- DE-A1-102012 001 580
- DE-A1-102012 009 884
- US-A1- 2008 060 433
- US-A1- 2013 278 402

## Beschreibung

Die vorliegende Erfindung betrifft ein Betriebsflüssigkeitsbehältersystem für Kraftfahrzeuge. Das Betriebsflüssigkeitsbehältersystem kann beispielsweise als Kraftstoffbehältersystem oder als Harnstoffbehältersystem ausgebildet sein.

Ein Kraftfahrzeug (im folgenden als Kfz abgekürzt) benötigt für dessen Betrieb unterschiedliche Betriebsflüssigkeiten. Bei Kfz mit einem Verbrennungsmotor wird Kraftstoff in einem als Kraftstoffbehälter ausgebildeten Betriebsflüssigkeitsbehälter des Kfz mit dem Kfz mitgeführt. Bei dem Kraftstoff kann es sich um Ottokraftstoff, Diesel oder Ethanol handeln. Ferner wird bei Kfz mit Verbrennungsmotoren, insbesondere mit Dieselmotoren zur Reduktion von Stickoxiden in Abgasen des Kfz eine wässrige Harnstofflösung in den Abgasstrang injiziert. Zu diesem Zweck weist das Kfz einen Harnstoffbehälter zur Bevorratung der wässrigen Harnstofflösung auf.

Für den Betrieb eines Verbrennungsmotors muss der Kraftstoff bestimmte Eigenschaften aufweisen. Ein Dieselmotor benötigt Dieselkraftstoff, wohingegen ein Ottomotor Ottokraftstoff benötigt. Ferner können unterschiedliche Ottomotoren beispielsweise unterschiedlich Ottokraftstoffe mit unterschiedlichen Oktanzahlen und/oder mit unterschiedlichem Ethanolgehalt benötigen. Dabei ist zu berücksichtigen, dass der Dampfdruck der Kraftstoffe temperaturabhängig ist. Unterschiedliche Dieselmotoren hingegen können beispielsweise unterschiedliche Dieselkraftstoffe mit unterschiedlichen Schwefelgehalten und/oder unterschiedlichen Cetanzahlen benötigen.

Für die Gewährleistung der richtigen Funktionalität der Anlage zur selektiven katalytischen Reduktion wird eine wässrige Harnstofflösung mit einer Harnstoffkonzentration innerhalb eines vorgegebenen Konzentrationsbereichs benötigt.

Ein Betriebsflüssigkeitsbehälter wird üblicherweise mittels einer Befüllvorrichtung in Form einer Zapfsäule mit einer Betriebsflüssigkeit gefüllt. Bei der Befüllung der Betriebsflüssigkeitsbehälter muss sich bei aus dem Stand der Technik bekannten Betriebsflüssigkeitsbehältern der Fahrer bzw. der Betanker auf die Angaben der Befüllvorrichtung hinsichtlich der Menge und der Beschaffenheit bzw. Qualität der eingefüllten Betriebsflüssigkeit verlassen. Dies kann zu Beeinträchtigungen der Leistungsfähigkeit und sogar zu Beschädigungen des Verbrennungsmotors führen, wenn beispielsweise in einen Diesel-Kraftstoffbehälter Ottokraftstoff eingefüllt wird. Ferner besteht die Gefahr, dass von der Befüllvorrichtung weniger Betriebsflüssigkeit oder Betriebsflüssigkeit mit einer minderen Qualität in den Betriebsflüssigkeitsbehälter eingefüllt wird als von der Befüllvorrichtung angegeben, so dass der Fahrer bzw. der Betanker für die eingefüllte Betriebsflüssigkeit einen zu hohen Preis bezahlt.

In der US 2009/0188923 A1 sind ein Tank zum Speichern von Harnstofflösung und eine Tankanordnung zum Speichern unterschiedlicher Fluide, wie Dieselfluid und Harnstofflösung, beschrieben. Der Tank kann ferner eine Füllanordnung und / oder eine Sensoranordnung umfassen, von denen jede angepasst ist, um ohne die Verwendung separater Befestigungselemente mit dem Tank verbunden zu werden. Die Tankanordnung kann ein Reservoir und einen Sensor zum automatischen Umleiten von nicht konformem Harnstoff umfassen Lösung zum Vorratsbehälter. In dem Tankkörper kann eine Aussparung definiert sein, um einen Gurt zum Befestigen des Tanks an dem Rahmen des Fahrzeugs aufzunehmen. Der Tank kann parallele Seitenwände aufweisen, die einen Vorsprung auf der einen und eine entsprechende Vertiefung auf der anderen Seite aufweisen, damit die Tanks während des Zusammenbaus leicht gestapelt werden können.

Weiterhin ist aus der US 2013/278402 A1 das Anzeigen eines Kraftstoffstands in einem Kraftstofftank eines Fahrzeugs bekannt. Ein Signal, das einen Kraftstoffstand anzeigt, der in dem Kraftstofftank des Fahrzeugs enthalten ist, wird von einer Kraftstoffstand-Sendeeinheit empfangen. Es wird eine visuelle Anzeige dargestellt, die den Kraftstoffstand anzeigt, und die visuelle Anzeige ist für eine außerhalb des Fahrzeugs befindliche Person deutlich sichtbar, wobei die Person sich neben einer Kraftstoffaufnahmedüse des Fahrzeugs befindet.

Der vorliegenden Erfindung liegt die Aufgabe zugrunde, ein Betriebsflüssigkeitsbehältersystem für ein Kraftfahrzeug bereitzustellen, der die Betriebssicherheit des Kfz vergrößert und der dem Fahrer bzw. einen verbesserten Betrugsschutz bietet.

Die der vorliegenden Erfindung zugrunde liegende Aufgabe wird durch ein Betriebsflüssigkeitsbehältersystem mit den Merkmalen des Anspruchs 1 gelöst. Vorteilhafte Ausgestaltungen sind in den abhängigen Ansprüchen beschrieben.

Im Genaueren wird die der vorliegenden Erfindung zugrunde liegende Aufgabe durch ein Betriebsflüssigkeitsbehältersystem mit zumindest einem Betriebsflüssigkeitsbehälter gelöst, wobei im Betriebsflüssigkeitsbehälter ein Qualitäts- und Füllstandsensor zum Bestimmen von zumindest einer Qualitätseigenschaft der im Betriebsflüssigkeitsbehälter befindlichen Betriebsflüssigkeit und eines Füllstandes des Betriebsflüssigkeitsbehälters angeordnet ist. Das erfindungsgemäße Betriebsflüssigkeitsbehältersystem umfasst ferner eine Anzeigeeinrichtung, die in einer Tankmulde und/oder Tankklappe des Betriebsflüssigkeitsbehältersystems angeordnet ist. Dabei ist die Anzeigeeinrichtung mit dem Qualitäts- und Füllstandsensor mittels einer Datenleitung zum Übertragen von Daten von dem Qualitäts- und Füllstandsensor zu der Anzeigeeinrichtung verbunden, wobei die Daten zumindest eine Qualitätseigenschaft der sich im Betriebsflüssigkeitsbehälter befindlichen Betriebsflüssigkeit und den Füllstand des Betriebsflüssigkeitsbehälter repräsentieren. Die Anzeigeeinrichtung ist dazu ausgebildet, die die zumindest eine Qualitätseigenschaft und den Füllstand repräsentierenden Daten darzustellen.

Mittels des Qualitäts- und Füllstandsensors lassen sich zumindest eine Qualitätseigenschaft der Betriebsflüssigkeit und der Füllstand des Betriebsflüssigkeitsbehälters ermitteln. Die so ermittelten Daten werden für den Fahrer bzw. Betanker gut sichtbar auf der Anzeigeeinrichtung im Bereich der Tankmulde und/oder der Innenseite der Tanklappe angezeigt. So ist es für den Betanker möglich festzustellen, ob die Betriebsflüssigkeitseigenschaften für sein Kfz ausreichend sind. Ferner kann der Betanker feststellen, ob beispielsweise der richtige Kraftstoff eingefüllt ist. Für den Fall, dass eine falsche Kraftstoffsorte in den Kraftstoffbehälter eingefüllt sein sollte, wird der Fahrer über die Anzeigeeinrichtung darüber in Kenntnis gesetzt, so dass der Betanker/Fahrer erst gar keinen Startversuch des Kfz durchführt, wodurch Beschädigungen des Verbrennungsmotors vermieden werden. Ferner kann der Betanker/Fahrer feststellen, ob die von der Befüllvorrichtung (z.B. eine Zapfanlage) angegebene eingefüllte Betriebsflüssigkeitsmenge der tatsächlich in den Betriebsflüssigkeitsbehälter eingefüllten Betriebsflüssigkeitsmenge entspricht.

Unter einer Qualitätseigenschaft der Betriebsflüssigkeit ist beispielsweise deren Ethanolgehalt, dessen Oktanzahl, dessen Cetanzahl, dessen Wassergehalt, dessen Trübung, dessen Peroxidgehalt, dessen Dampfdruck, dessen Schwefelgehalt, dessen Biodieselanteil, dessen Harnstoffanteil usw. zu verstehen. Folglich ist der Qualitäts- und Füllstandsensor dazu ausgebildet, den Ethanolgehalt und/oder die Oktanzahl und/oder die Cetanzahl und/oder den Wassergehalt und/oder die Trübung und/oder den Peroxidgehalt und/oder den Dampfdruck und/oder den Schwefelgehalt und/oder den Biodieselanteil und/oder den Harnstoffanteil der Betriebsflüssigkeit im Betriebsflüssigkeitsbehälter zu bestimmen.

Der Qualitäts- und Füllstandsensor kann auch als Betriebsflüssigkeitsqualitäts- und Füllstandsensor oder als Betriebsflüssigkeitsqualitäts- und Betriebsflüssigkeitsfüllstandsensor bezeichnet werden. Der Qualitäts- und/oder Füllstandsensor ist zum Bestimmen von Qualitätseigenschaften der Betriebsflüssigkeit und der im Betriebsflüssigkeitsbehälter befindlichen Betriebsflüssigkeitsmenge ausgebildet. Der Qualitäts- und Füllstandsensor kann als Qualitätssensor ausgebildet sein. Ferner kann der Qualitäts- und Füllstandsensor als Füllstandsensor ausgebildet sein. Weiterhin kann der Qualitäts- und Füllstandsensor zweigeteilt sein und einen Qualitätssensor und einen separaten Füllstandsensor umfassen. Das Betriebsflüssigkeitsbehältersystem kann auch mehrere Betriebsflüssigkeitsbehälter umfassen, beispielsweise einen Kraftstofftank, einen Harnstoffbehälter und einen Wasserbehälter.

Vorzugsweise umfasst das Betriebsflüssigkeitsbehältersystem eine Tanksteuereinrichtung, die mit dem Qualitäts- und Füllstandsensor zum Empfangen der die zumindest eine Qualitätseigenschaft und den Füllstand repräsentierenden Daten mittels der Datenleitung verbunden ist. Die Tanksteuereinrichtung ist mittels der Datenleitung mit der Anzeigeeinrichtung zum Übertragen der die zumindest eine Qualitätseigenschaft und den Füllstand repräsentierenden Daten verbunden. Ein entsprechend ausgebildetes Betriebsflüssigkeitsbehältersystem bietet den Vorteil, dass die von dem Qualitäts- und Füllstandsensor ermittelten Daten von der Tanksteuereinrichtung weiterverarbeitet werden können. Beispielsweise können Vergleiche mit Sollwerten für die Qualitätseigenschaften in der Tanksteuereinrichtung durchgeführt werden. Vorzugsweise ist die Tanksteuereinrichtung dazu ausgebildet ist, zusätzlich zu den von dem Qualitäts- und Füllstandsensor übertragenen Daten weitere eine Neigung des Kraftfahrzeugtanks repräsentierende Daten zu empfangen. Ferner ist die Tanksteuereinrichtung dazu ausgebildet, mittels der von dem Qualitäts- und Füllstandsensor übertragenen Daten und der die Neigung des Kraftfahrzeugtanks repräsentierenden Daten einen Ist-Füllstand zu ermitteln.

Der Ist-Füllstand entspricht dem Füllstand des Betriebsflüssigkeitsbehälters (also dem nominalen Füllstand des Betriebsflüssigkeitsbehälters), wenn der Betriebsflüssigkeitsbehälter keine Neigung aufweist, d.h. wenn das Kfz auf einer Ebene ohne Neigung positioniert ist. Der Zusammenhang zwischen dem Füllstandsensorsignal, den die Neigung des Betriebsflüssigkeitsbehälters repräsentierenden Daten und dem tatsächlichen Füllgrad des Betriebsflüssigkeitsbehälters (Ist-Füllstand) ist vorzugsweise in einem Korrekturkennfeld gespeichert, das vorzugsweise in der Tanksteuereinrichtung abgespeichert ist.

Die Messung der Raumlage des Kraftfahrzeugs bzw. des Betriebsflüssigkeitsbehälters erfolgt vorzugsweise mit einem fahrzeugeigenen Lagesensor. Zum Erzeugen des Korrekturkennfeldes kann der Betriebsflüssigkeitsbehälter beispielsweise um eine Horizontalachse in 5° Schritten geneigt und der Betriebsflüssigkeitsbehälter in jeder Schräglage um die Vertikalachse und 360° in 5° Schritten rotiert werden. Dabei wird in jedem dieser Schräglagen- und Rotationspunkten eine Höhen-Volumen-Kennlinie erzeugt und in das Korrekturkennfeld eingetragen. Das Korrekturkennfeld dient dann zur Bestimmung der exakten im Betriebsflüssigkeitsbehälter befindlichen Betriebsflüssigkeitsmenge. In dem Korrekturfeld können ferner Temperaturvariationen des Kraftstoffes berücksichtigt sein.

Ein entsprechend ausgebildeter Betriebsflüssigkeitsbehälter bietet den Vorteil, dass der tatsächliche Befüllgrad des Betriebsflüssigkeitsbehälters nochmals mit erhöhter Genauigkeit bestimmbar ist, so dass eine erhöhte Sicherheit zum Erreichen eines vorgegebenen Ziels erreicht wird, wobei gleichzeitig gewährleistet wird, dass nicht zu viel Kraftstoff im Betriebsflüssigkeitsbehälter mitgeführt wird, wodurch das Gewicht des Kraftfahrzeugs und damit dessen Kohlenstoffdioxidausstoß reduziert werden. Weiterhin wird einer Alterung der Betriebsflüssigkeit durch Mitnahme von lediglich der benötigten Betriebsflüssigkeitsmenge entgegengewirkt.

Vorzugsweise umfasst der Betriebsflüssigkeitsbehälter einen Neigungssensor, mittels dem die Neigung des Betriebsflüssigkeitsbehälters bestimmbar ist. Dabei ist der Neigungssensor mit der Tanksteuereinrichtung über die zweite Datenaustauschverbindung und/oder über eine weitere Datenaustauschverbindung, die über eine weitere Signalleitung realisiert sein kann, verbunden, über die von dem Neigungssensor ermittelte und die Neigung des Betriebsflüssigkeitsbehälters repräsentierende Daten an die Tanksteuereinrichtung übertragbar sind.

Vorzugsweise ist die Tanksteuereinrichtung dazu ausgebildet ist, bei Ermittlung einer Qualitätseigenschaft der im Betriebsflüssigkeitsbehälter befindlichen Betriebsflüssigkeit, die eine vorbestimmte Qualitätsgrenze unterschreitet und/oder überschreitet, über eine Datenausgabeeinheit ein Warnsignal auszugeben.

In der Tanksteuereinrichtung sind Qualitätsgrenzwerte für den Ethanolgehalt und/oder die Oktanzahl und/oder die Cetanzahl und/oder den Wassergehalt und/oder die Trübung und/oder den Peroxidgehalt und/oder den Dampfdruck und/oder den Schwefelgehalt und/oder den Biodieselanteil und/oder den Harnstoffanteil in einem elektronischen Speicher hinterlegt. In der Tanksteuereinrichtung werden die von dem Qualitäts- und/oder Füllstandsensor bereitgestellten und die oben angegebenen Qualitätseigenschaften repräsentierenden Daten mit den Qualitätsgrenzwerten verglichen, wobei bei Unterschreiten und/oder Überschreiten von zumindest einer Qualitätsgrenze durch eine der Qualitätseigenschaften der Betriebsflüssigkeit das Warnsignal mittels der Tanksteuereinrichtung ausgegeben wird.

Vorzugsweise ist die Tanksteuereinrichtung dazu ausgebildet, das Warnsignal über die Datenleitung an die Anzeigeeinrichtung zu übertragen, woraufhin die Anzeigeeinrichtung das Warnsignal darstellt.

Das entsprechend ausgebildete Betriebsflüssigkeitsbehältersystem bietet den Vorteil, dass das Warnsignal vom Fahrer/Betanker direkt während des Befüllvorganges des Betriebsflüssigkeitsbehälters sichtbar ist, da das Warnsignal im Bereich der Tankmulde und/oder der Tankklappe angezeigt wird. Sobald das Warnsignal für den Fahrer/Betanker sichtbar ist, kann der Fahrer/Betanker den Befüllvorgang des Betriebsflüssigkeitsbehälters sofort beenden, so dass ein Schaden an dem Kraftfahrzeug minimiert oder gar verhindert werden kann.

Das Warnsignal kann selbstverständlich auch z. B. an eine Motorsteuerelektronik des Kfz gesendet werden, so dass bei falscher Qualität des Kraftstoffs oder falscher Kraftstoffart (z. B. Diesel anstatt Ottokraftstoff) der Motor gar nicht erst gestartet werden kann.

Weiter vorzugsweise ist der Betriebsflüssigkeitsbehälter derart ausgebildet, dass dieser zumindest einen elektrisch und/oder elektromagnetisch betätigbaren Aktuator umfasst, mittels dem ein Beenden eines Befüllvorganges des Betriebsflüssigkeitsbehälters initiierbar ist. Dabei ist die Tanksteuereinrichtung mit dem Aktuator über eine Datenaustauschverbindung verbunden und ferner dazu ausgebildet, bei Ausgeben des Warnsignals an den Aktuator ein Befüllstoppsignal über die Datenaustauschverbindung zu übertragen. Bei Empfang des Befüllstoppsignals initiiert der Aktuator das Beenden des Befüllvorganges.

Das Befüllstoppsignal wird auch als Tankstoppsignal und das Befüllstartsignal wird auch als Tankstartsignal bezeichnet.

Ein entsprechend ausgebildeter Betriebsflüssigkeitsbehälter bietet den Vorteil, dass ein Befüllvorgang durch das Betriebsflüssigkeitsbehältersystem selbstständig beendet werden kann, wenn seitens der Tanksteuereinrichtung festgestellt wird, dass beispielsweise eine eingefüllte Kraftstoffart nicht der Kraftstoffart des Verbrennungsmotors des Kfz entspricht, oder wenn beispielsweise die Qualität der Betriebsflüssigkeit nicht der geforderten Qualität entspricht. Durch ein selbständiges Beenden des Befüllvorganges wird somit die Betriebssicherheit des Kfz erhöht und Garantiekosten können gesenkt werden.

Der Betriebsflüssigkeitsbehälter ist vorzugsweise derart ausgebildet, dass der zumindest eine Aktuator als Betriebs- und/oder Betankungsentlüftungsventil ausgebildet ist, das im Betriebsflüssigkeitsbehälter angeordnet ist. Dabei ist das Betriebs- und/oder Betankungsentlüftungsventil elektrisch und/oder elektromagnetisch zwischen einer Offenstellung und einer Schließstellung betätigbar/verstellbar, wobei in der Offenstellung des Betriebs- und/oder Betankungsentlüftungsventils der Betriebsflüssigkeitsbehälter mittels des Betriebs- und/oder Betankungsentlüftungsventils mit einer Entlüftungsleitung fluidverbunden ist, und wobei in der Schließstellung des Betriebs- und/oder Betankungsentlüftungsventils der Betriebsflüssigkeitsbehälter von der Entlüftungsleitung mittels des Betriebs- und/oder Betankungsentlüftungsventils fluidgetrennt ist.

Die Verwendung des Betriebs- und/oder Betankungsentlüftungsventils zum Beenden eines Befüllvorganges bietet den Vorteil, dass sowieso für den Betrieb des Betriebsflüssigkeitsbehälters notwendige Ventileinrichtungen verwendet werden, um den Betankungsvorgang elektrisch und/oder elektromagnetisch zu beenden, so dass nicht weitere Bauteile im Betriebsflüssigkeitsbehälter einzubauen sind, wodurch die Komplexität des entsprechend ausgebildeten Betriebsflüssigkeitsbehälters nicht erhöht wird.

Der Betriebsflüssigkeitsbehälter ist vorzugsweise derart ausgebildet, dass der zumindest eine Aktuator als Rückschlagventil ausgebildet ist, das in einem in den Betriebsflüssigkeitsbehälter mündenden Einfüllrohr angeordnet ist. Dabei ist das Rückschlagventil elektrisch und/oder elektromagnetisch zwischen einer Offenstellung und einer Schließstellung betätigbar/verstellbar, wobei in der Offenstellung des Rückschlagventils der Betriebsflüssigkeitsbehälter mit dem Einfüllrohr fluidverbunden ist, und wobei in der Schließstellung des Rückschlagventils der Betriebsflüssigkeitsbehälter von dem Einfüllrohr mittels des Rückschlagventils fluidgetrennt ist oder die lichte Weite des Einfüllrohrs mittels des Rückschlagventils reduziert ist.

Weiter vorzugsweise ist der Betriebsflüssigkeitsbehälter derart ausgebildet, dass der zumindest eine Aktuator als Störkörper ausgebildet ist, der in einem in den Betriebsflüssigkeitsbehälter mündenden Einfüllrohr angeordnet ist, wobei der Störkörper elektrisch und/oder elektromagnetisch zwischen einer Offenstellung und einer Störstellung betätigbar ist, wobei in der Störstellung des Störkörpers eine lichte Weite des Einfüllrohrs nicht reduziert ist, und wobei in der Störstellung des Störkörpers dieser in das Einfüllrohr hineinragt und die lichte Weite des Einfüllrohrs reduziert.

Weiter vorzugsweise ist der Betriebsflüssigkeitsbehälter derart ausgebildet, dass der zumindest eine Aktuator als Elektromagnet ausgebildet ist, der in einem Einfüllstutzen eines in den Betriebsflüssigkeitsbehälter mündenden Einfüllrohrs angeordnet ist, wobei der Elektromagnet zwischen einem Aktivzustand und einem Passivzustand betätigbar/verstellbar ist. Durch Aktivieren des Elektromagneten wird ein Schließen eines in das Einfüllrohr eingeführten Zapfventils bewirkt, oder durch Aktivieren des Elektromagneten wird ein Öffnen eines Zapfventils bewirkt.

Die drei zuletzt beschriebenen Ausführungen des Betriebsflüssigkeitsbehälters bieten den Vorteil, dass zum Beenden des Befüllvorganges kein Innendruck im Betriebsflüssigkeitsbehälter aufgebaut werden muss, so dass nach Beenden des Befüllvorganges der Betriebsflüssigkeitsbehälter im Wesentlichen drucklos ist. Da kein Innendruck aufgebaut wird, dehnt sich der Betriebsflüssigkeitsbehälter auch nicht aus, so dass die Genauigkeit der Füllmengenbestimmung im Betriebsflüssigkeitsbehälter erhöht ist. Ferner bietet die Tatsache, dass zum Beenden des Befüllvorganges kein Druck im Betriebsflüssigkeitsbehälter aufgebaut werden muss, den Vorteil, dass die in den Betriebsflüssigkeitsbehälter eingefüllte Betriebsflüssigkeitsmenge präziser der in den Betriebsflüssigkeitsbehälter einzufüllenden Betriebsflüssigkeitsmenge entspricht. Denn das in dem Betriebsflüssigkeitsbehälter verbleibende Gasvolumen fungiert nicht als komprimierbare Gasfeder. Die Menge der in das Einfüllrohr eingefüllten Betriebsflüssigkeit ist sehr genau bestimmbar, so dass die Genauigkeit der eingefüllten Betriebsflüssigkeitsmenge erhöht ist.

In einer weiteren bevorzugten Ausführungsform ist der Betriebsflüssigkeitsbehälter derart ausgebildet, dass der zumindest eine Aktuator als Absperrventil ausgebildet ist, das zwischen dem Betriebsflüssigkeitsbehälter und einem Aktivkohlefilter und/oder zwischen einem Aktivkohlefilter und der Atmosphäre angeordnet ist. Das Absperrventil ist elektrisch und/oder elektromagnetisch zwischen einer Offenstellung und einer Schließstellung betätigbar/verstellbar, wobei in der Offenstellung des Absperrventils der Betriebsflüssigkeitsbehälter mittels des Absperrventils mit dem Aktivkohlefilter bzw. mit der Atmosphäre fluidverbunden ist, und wobei in der Schließstellung des Absperrventils der Betriebsflüssigkeitsbehälter von dem Aktivkohlefilter bzw. von der Atmosphäre mittels des Absperrventils fluidgetrennt ist.

Weiter vorzugsweise ist das Betriebsflüssigkeitsbehältersystem derart ausgebildet, dass die Tanksteuereinrichtung eine Signalsendeeinheit zum drahtlosen Senden von Signalen an eine Befüllvorrichtung aufweist.

Somit lässt sich mittels der Tanksteuereinrichtung beispielsweise eine in den Betriebsflüssigkeitsbehälter einzufüllender Betriebsflüssigkeit spezifizieren, so dass die Befüllvorrichtung lediglich die entsprechende Betriebsflüssigkeit zur Verfügung gestellt. Eine Fehlbetankung wird somit zuverlässig vermieden. Ferner lässt sich mittels der Tanksteuereinrichtung ein Tankstoppsignal an die Befüllvorrichtung senden, so dass eine Befüllung des Betriebsflüssigkeitsbehälters seitens der Befüllvorrichtung beendet wird. Wenn beispielsweise seitens der Tanksteuereinrichtung festgestellt wird, dass die falsche Betriebsflüssigkeit oder eine Betriebsflüssigkeit nicht geeigneter Qualität in den Betriebsflüssigkeitsbehälter eingeführt wird, kann die Tanksteuereinrichtung an die Befüllvorrichtung das Tankstoppsignal ausgeben, woraufhin der Befüllvorgang sofort beendet wird. Eine entsprechende Ausbildung des Betriebsflüssigkeitsbehältersystems ermöglicht bei Feststellen einer Einfüllung von nicht geeigneter Betriebsflüssigkeit, dass besonders wenig der nicht geeigneten Betriebsflüssigkeit in den Betriebsflüssigkeitsbehälter eingeleitet wird.

Weitere Vorteile, Einzelheiten und Merkmale der Erfindung ergeben sich nachfolgend aus dem erläuterten Ausführungsbeispiel. Dabei zeigt im Einzelnen:
- Figur 1:: eine schematische Darstellung eines erfindungsgemäßen Betriebsflüssigkeitsbehältersystems; und
- Figur 2:: eine schematische Darstellung einer Anzeigeeinrichtung des Betriebsflüssigkeitsbehältersystems.

In der nun folgenden Beschreibung bezeichnen gleiche Bezugszeichen gleiche Bauteile beziehungsweise gleiche Merkmale, so dass eine in Bezug auf eine Figur durchgeführte Beschreibung bezüglich eines Bauteils auch für die anderen Figuren gilt, so dass eine wiederholende Beschreibung vermieden wird.

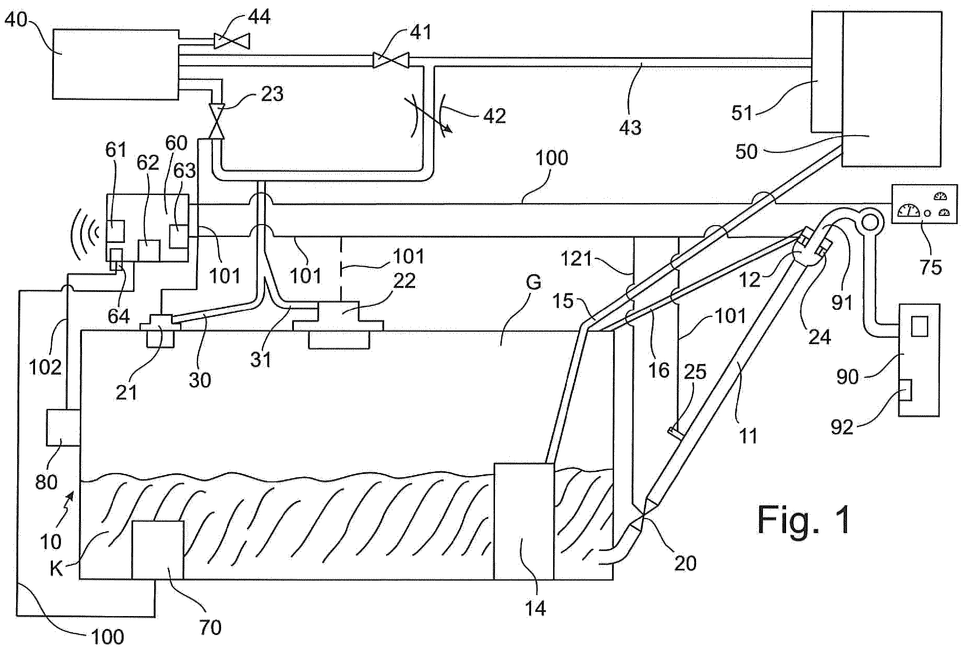

In Figur 1 ist ein erfindungsgemäßes Betriebsflüssigkeitsbehältersystem dargestellt, bei dem der Betriebsflüssigkeitsbehälter 10 als ein Kraftfahrzeugtank 10 ausgebildet ist. Diese Ausführung der vorliegenden Erfindung ist lediglich exemplarisch. Das erfindungsgemäße Betriebsflüssigkeitsbehältersystem kann selbstverständlich anstelle des Kraftfahrzeugtanks 10 oder zusätzlich zum Kraftfahrzeugtank 10 einen als Harnstoffbehälter 10 ausgebildeten Betriebsflüssigkeitsbehälter 10 umfassen. Weiterhin kann das erfindungsgemäße Betriebsflüssigkeitsbehältersystem kann selbstverständlich anstelle des Kraftfahrzeugtanks 10 oder zusätzlich zum Kraftfahrzeugtank 10 einen als Wasserbehälter/Wischwasserbehälter 10 ausgebildeten Betriebsflüssigkeitsbehälter 10 aufweisen.

Der Kraftfahrzeugtank 10 beherbergt eine gewisse Menge von Kraftstoff K und darüber hinaus ein Gasvolumen G, das üblicherweise mit Kohlenwasserstoffen gesättigt ist. Zum Einfüllen von Kraftstoff K weist der Kraftfahrzeugtank 10 ein Einfüllrohr 11 auf, an dessen vom Kraftstofftank 10 abgewandten Ende ein Einfüllstutzen 12 angeordnet ist. Weiterhin beherbergt der Kraftfahrzeugtank 10 eine Kraftstoffpumpe 14. Die Kraftstoffpumpe 14 ist über eine Kraftstoffleitung 15 mit einem Motor 50 eines in der Figur nicht dargestellten Kraftfahrzeugs zum Fördern des Kraftstoff K hin zum Motor 50 fluidverbunden. Ferner kann der Kraftfahrzeugtank 10 eine Rezirkulationsleitung 16 umfassen, die mit dem Kraftfahrzeugtank 10 und einem vom Einfüllstutzen 12 umschlossenen Volumen fluidverbunden ist. Die Rezirkulationsleitung 16 dient einen Gasaustausch zwischen dem Kraftfahrzeugtank 10 und dem Einfüllstutzen 12 während eines Betankungsvorgangs des Kraftfahrzeugtanks 10 und ist lediglich optional und üblicherweise für den US-amerikanischen Markt vorgesehen.

Der als Kraftfahrzeugtank 10 ausgebildete Betriebsflüssigkeitsbehälter 10 umfasst einen in diesem angeordneten Qualitäts- und Füllstandsensor 70 zum Bestimmen von zumindest einer Qualitätseigenschaft des im Kraftfahrzeugtank 10 befindlichen Kraftstoffs und eines Füllstandes des Kraftfahrzeugtanks 10.

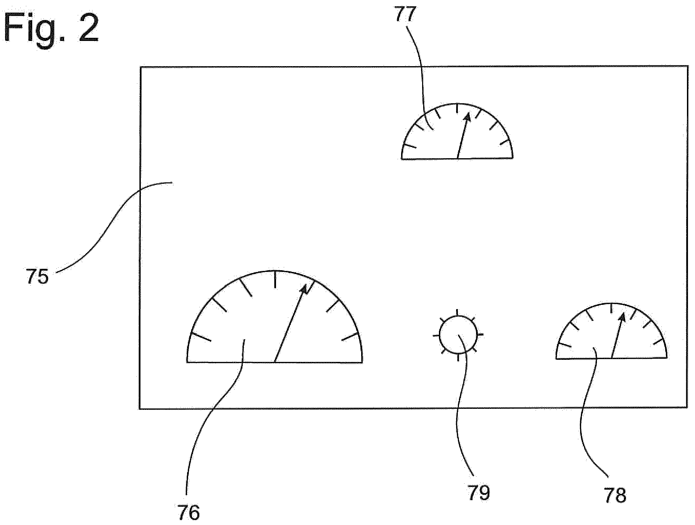

Ferner umfasst das Betriebsflüssigkeitsbehältersystem eine Anzeigeeinrichtung 75, die in einer Tankmulde und/oder Tancklappe des Betriebsflüssigkeitsbehältersystems angeordnet ist. Die Anzeigeeinrichtung 75 ist dabei vorzugsweise an der Innenseite der Tankklappe angeordnet. Die Anzeigeeinrichtung 75 ist in Alleinstellung in Figur 2 dargestellt. Es ist ersichtlich, dass die Anzeigeeinrichtung 75 mehrere Anzeigeelemente aufweist, über die beispielsweise der Füllstand des Kraftfahrzeugtanks 10 ablesbar ist. In der Anzeigeeinrichtung 75 sind ferner weitere Anzeigeelemente vorgesehen, die den Füllstand eines Wischwasserbehälters und eines Harnstoffbehälters anzeigen, wobei bei dem in Figur 1 dargestellten Betriebsflüssigkeitsbehältersystem weder der Harnstoffbehälter noch der Wischwasserbehälter dargestellt sind. Die Anzeigeeinrichtung 75 weist ferner ein Anzeigeelement auf, über das ein Warnsignal darstellbar ist.

Die Anzeigeeinrichtung 75 ist mit dem Qualitäts- und Füllstandsensor 70 mittels einer Datenleitung 100 zum Übertragen von Daten von dem Qualitäts- und Füllstandsensor 70 zu der Anzeigeeinrichtung 70 verbunden, wobei die Daten zumindest eine Qualitätseigenschaft des sich im Kraftfahrzeugtank 10 befindlichen Kraftstoffs und den Füllstand des Kraftfahrzeugtanks 10 repräsentieren. Die Anzeigeeinrichtung 75 ist dazu ausgebildet, die die zumindest eine Qualitätseigenschaft und den Füllstand repräsentierenden Daten darzustellen. Die Tanksteuereinrichtung 60 ist mit dem Qualitäts- und Füllstandsensor 70 zum Empfangen der die zumindest eine Qualitätseigenschaft und den Füllstand repräsentierenden Daten mittels der Datenleitung 100 verbunden. Ferner ist die Tanksteuereinrichtung 60 ist mittels der Datenleitung 100 mit der Anzeigeeinrichtung 75 zum Übertragen der die zumindest eine Qualitätseigenschaft und den Füllstand repräsentierenden Daten verbunden.

Unter einer Qualitätseigenschaft der Betriebsflüssigkeit ist beispielsweise deren Ethanolgehalt, dessen Oktanzahl, dessen Cetanzahl, dessen Wassergehalt, dessen Trübung, dessen Peroxidgehalt, dessen Dampfdruck, dessen Schwefelgehalt, dessen Biodieselanteil, dessen Harnstoffanteil usw. zu verstehen. Folglich ist der Qualitäts- und Füllstandsensor 70 dazu ausgebildet, den Ethanolgehalt und/oder die Oktanzahl und/oder die Cetanzahl und/oder den Wassergehalt und/oder die Trübung und/oder den Peroxidgehalt und/oder den Dampfdruck und/oder den Schwefelgehalt und/oder den Biodieselanteil und/oder den Harnstoffanteil der Betriebsflüssigkeit im Betriebsflüssigkeitsbehälter zu bestimmen.

Mittels des Qualitäts- und Füllstandsensors 70 lassen sich zumindest eine Qualitätseigenschaft der Betriebsflüssigkeit und der Füllstand des Betriebsflüssigkeitsbehälters 10 ermitteln. Die so ermittelten Daten werden für den Fahrer bzw. Betanker gut sichtbar auf der Anzeigeeinrichtung 75 im Bereich der Tankmulde und/oder der Innenseite der Tanklappe angezeigt. So ist es für den Betanker möglich festzustellen, ob die Betriebsflüssigkeitseigenschaften für sein Kfz ausreichend sind. Ferner kann der Betanker feststellen, ob beispielsweise der richtige Kraftstoff eingefüllt ist. Für den Fall, dass eine falsche Kraftstoffsorte in den Kraftstoffbehälter eingefüllt sein sollte, wird der Fahrer über die Anzeigeeinrichtung 75 darüber in Kenntnis gesetzt, so dass der Betanker/Fahrer erst gar keinen Startversuch des Kfz durchführt, wodurch Beschädigungen des Verbrennungsmotors 50 vermieden werden. Ferner kann der Betanker/Fahrer feststellen, ob die von der Befüllvorrichtung 90 (z.B. eine Zapfanlage) angegebene eingefüllte Betriebsflüssigkeitsmenge der tatsächlich in den Betriebsflüssigkeitsbehälter 10 eingefüllten Betriebsflüssigkeitsmenge entspricht.

Ferner ist aus Figur 1 ersichtlich, dass die Tanksteuerungseinrichtung 60 eine Datenausgabeeinheit 63 umfasst, über die Daten und/oder Signale über eine erste Datenaustauschverbindung 101 an elektrisch und/oder elektromagnetisch betätigbare Aktuatoren 20, 21, 22, 23, 24, 25, 44 übertragbar sind. Die erste Datenaustauschverbindung 101 kann auch als erste Signalleitung 101 oder allgemein als erste elektrische Leitung 101 bezeichnet werden. Die weiter unten noch zu spezifizierenden Aktuatoren 20-25, 44 sind dazu ausgebildet, ein Beenden eines Befüllvorganges des Kraftfahrzeugtanks 10 zu initiieren. Hierzu ist die Tanksteuerungseinrichtung 60 dazu ausgebildet, an einen oder an mehrere der Aktuatoren 20-25, 44 ein Befüllstoppsignal über die Datenaustauschverbindung 101 zu übertragen, so dass bei Empfang des Befüllstoppsignals zumindest einer der Aktuatoren 20-25, 44 auf eine weiter unten zu spezifizieren der Art und Weise ein Beenden des Befüllvorganges initiiert.

In Figur 1 ist der Kraftfahrzeugtank 10 mit Aktuatoren 20-25, 44 dargestellt. Jedoch ist die vorliegende Erfindung nicht derart zu verstehen, dass sämtliche Aktoren Aktuatoren 20-25, 44 notwendig sind, um ein Beenden eines Befüllvorganges des Kraftfahrzeugtanks 10 zu initiieren. Vielmehr kann ein Beenden eines Befüllvorganges des Kraftfahrzeugtanks 10 durch lediglich einen einzigen elektrisch und/oder elektromagnetisch betätigbaren Aktuator 20-25, 44 initiiert werden. Folglich ist die vorliegende Erfindung derart zu verstehen, dass der erfindungsgemäße Kraftfahrzeugtank 10 lediglich auch einen einzigen elektrisch und/oder elektromagnetisch betätigbaren Aktuator 20-25, 44 aufweisen kann. Daher ist Figur 1 so zu verstehen, dass der Kraftfahrzeugtank 10 zumindest einen der elektrisch und/oder elektromagnetisch betätigbaren Aktuatoren 20-25 aufweist. Jedoch kann der Kraftfahrzeugtank 10 auch mehrere der elektrisch und/oder elektromagnetisch betätigbaren Aktuatoren 20-25, 44 aufweisen.

Der elektrisch und/oder elektromagnetisch betätigbare Aktuator 22 ist als Betankungsentlüftungsventil 22 ausgebildet, das im Kraftfahrzeugtank 10 angeordnet ist. Das Betriebsentlüftungsventil 21 ist während der Betankung verschlossen. Bei Empfang eines Befüllstoppsignals, das von der Tanksteuereinrichtung 60 über die Datenausgabeeinheit 63 an das Betankungsentlüftungsventil 22 ausgegeben wird, schließt dieses Ventil, so dass ein Entlüften des Kraftfahrzeugtanks 10 während des Betankungsvorganges unterbunden wird. Durch weiteres Einleiten von Kraftstoff über das Einfüllrohr 11 in den Kraftfahrzeugtank 10 steigt der Tankinnendruck, so dass in das Einfüllrohr 11 eingeleiteter Kraftstoff in dem Einfüllrohr 11 ansteigt, bis der Kraftstoff eine Abschaltbohrung eines eingesetzten Zapfventils erreicht, wodurch der Befüllvorgang beendet wird.

Das Betankungsentlüftungsventil 22 ist elektrisch und/oder elektromagnetisch zwischen einer Offenstellung und einer Schließstellung betätigbar/verstellbar, wobei in dessen Offenstellung der Kraftfahrzeugtank 10 über das Betankungsentlüftungsventil 22 mit der Atmosphäre fluidverbunden ist, und wobei in der Schließstellung Betankungsentlüftungsventils 22 der Kraftfahrzeugtank 10 von der Atmosphäre fluidgetrennt ist.

In Figur 1 ist dargestellt, dass die Fluidverbindung des Kraftfahrzeugtanks 10 zur Atmosphäre über ein Aktivkohlefilter 40 und einen Auslassventil 41 bzw. ein Diagnoseventil 44 erfolgt, jedoch ist das Aktivkohlefilter 40 für die vorliegende Erfindung nicht obligatorisch sondern optional.

Das in Figur 1 dargestellte Betriebsflüssigkeitsbehältersystem weist einen Aktivkohlefilter 40 auf, das über ein Absperrventil 23 mit dem Betriebsentlüftungsventil 21 und dem Betankungsentlüftungsventil 22 und somit dem Kraftfahrzeugtank 10 fluidverbunden ist. Das Betriebsentlüftungsventil 21 und das Betankungsentlüftungsventil 22 müssen nicht notwendigerweise elektrisch und/oder elektromagnetisch betätigbar sein, sondern lediglich das Absperrventil 23 muss elektrisch und/oder elektromagnetisch betätigbar sein. Jedoch ist es selbstverständlich auch möglich, dass auch das Betriebsentlüftungsventil 21 und auch das Betankungsentlüftungsventil 22 neben dem Absperrventil 23 elektrisch und/oder elektromagnetisch betätigbar sind.

Das Absperrventil 23 ist zwischen dem Kraftfahrzeugtank 10 und dem Aktivkohlefilter 40 angeordnet und elektrisch und/oder elektromagnetisch zwischen einer Offenstellung und einer Schließstellung betätigbar/verstellbar, wobei in der Offenstellung des Absperrventils 23 der Kraftfahrzeugtank 10 mittels des Absperrventil 23 mit dem Aktivkohlefilter 40 fluidverbunden ist, und wobei in der Schließstellung des Absperrventils 23 der Kraftfahrzeugtank 10 von dem Aktivkohlefilter 40 mittels des Absperrventils 23 fluidgetrennt ist. Bei Empfang eines Befüllstoppsignals, dass von der Datenausgabeeinheit 63 der Tanksteuereinrichtung 60 an das Absperrventil 23 über die erste Datenaustauschverbindung 101 übertragen wird, schließt das Absperrventil 23, so dass eine Entlüftung des Kraftstoffbehälters 10 während des Betankungsvorganges unterbunden wird, so dass durch Einfüllen von Kraftstoff über das Einfüllrohr 11 in den Kraftfahrzeugtank 10 dessen Innendruck ansteigt. Durch weiteres Einleiten von Kraftstoff in das Einfüllrohr 11 steigt der Kraftstoff in dem Einfüllrohr 11 an, bis eine Abschaltbohrung eines in der Figur nicht dargestellten Zapfventils erreicht wird, woraufhin der Befüllvorgang beendet wird.

Der Aktuator 20 ist als ein Rückschlagventil 20 ausgebildet, das in dem Einfüllrohr 11 angeordnet ist. Das Rückschlagventil 20 ist elektrisch und/oder elektromagnetisch zwischen einer Offenstellung und einer Schließstellung betätigbar, wobei in der Offenstellung des Rückschlagventils 20 der Kraftfahrzeugtank 10 mit dem Einfüllrohr 11 fluidverbunden ist, und wobei in der Schließstellung des Rückschlagventils 20 der Kraftfahrzeugtank 10 von dem Einfüllrohr 11 mittels des Rückschlagventils 20 fluidgetrennt ist oder zumindest die lichte Weite des Einfüllrohrs 11 mittels des Rückschlagventils 20 reduziert ist.

Bei Empfang eines Befüllstoppsignals, das von der Datenausgabeeinheit 63 der Tanksteuerungseinrichtung 60 über die erste Datenaustauschverbindung 101 an das Rückschlagventil 20 ausgegeben wird, wird das Rückschlagventil 20 in dessen Schließstellung überführt, woraufhin in das Einfüllrohr 11 eingeleiteter Kraftstoff nicht mehr oder lediglich verlangsamt in den Kraftfahrzeugtank 10 eingeleitet werden kann. Durch weiteres Einleiten von Kraftstoff in das Einfüllrohr 11 steigt der Kraftstoff in dem Einfüllrohr 11 an, bis eine Abschaltbohrung eines in der Figur nicht dargestellten Zapfventils erreicht wird, woraufhin der Befüllvorgang beendet wird.

Ein entsprechend ausgebildeter Kraftfahrzeugtank 10 bietet den Vorteil, dass zum Beenden des Befüllvorganges kein Druck innerhalb des Kraftfahrzeugtanks 10 aufgebaut werden muss, so dass nach Beenden des Befüllvorganges der Kraftstofftank 10 im Wesentlichen drucklos ist. Dadurch wird eine Beladung eines eventuell vorgesehenen Aktivkohlefilters 40 reduziert.

Darüber hinaus ist auch die Bestimmung einer Kraftstoffmenge im Kraftfahrzeugtank 10 mit einer erhöhten Genauigkeit möglich, da aufgrund der unterbleibenden Druckbeaufschlagung des Kraftfahrzeugtanks 10 keine oder eine verminderte Deformation des Kraftfahrzeugtanks 10 erreicht wird.

Der Aktuator 25 ist als ein Störkörper 25 ausgebildet, der im Einfüllrohr 11 angeordnet ist. Der Störkörper 25 ist dabei zwischen einer Offenstellung und einer Störstellung elektrisch und/oder elektromagnetisch betätigbar/verstellbar, wobei in der Offenstellung des Störkörpers 25 die lichte Weite des Einfüllrohrs 11 nicht reduziert ist, und wobei in der Störstellung des Störkörpers 25 dieser in das Einfüllrohr 11 hineinragt und somit die lichte Weite des Einfüllrohrs 11 reduziert.

Bei Empfang eines Befüllstoppsignals, das von der Datenausgabeeinheit 63 der Tanksteuerungseinrichtung 60 über die erste Datenaustauschverbindung 101 an den Störkörper 25 ausgegeben wird, wird der Störkörper 25 in dessen Schließstellung überführt, woraufhin in das Einfüllrohr 11 eingeleiteter Kraftstoff nicht mehr oder mit einer verminderten Geschwindigkeit in den Kraftfahrzeugtank 10 eingeleitet werden kann. Durch den Störkörper 25 wird eine Verwirbelung des eingeleiteten Kraftstoffs bewirkt, woraufhin eine Abschaltöffnung des Zapfventils 91 mit dem verwirbelten Kraftstoff in Berührung kommt, so dass eine Abschaltung durch das Zapfventil 91 erfolgt. Durch weiteres Einleiten von Kraftstoff in das Einfüllrohr 11 steigt der Kraftstoff in dem Einfüllrohr 11 an, bis eine Abschaltbohrung eines in der Figur nicht dargestellten Zapfventils erreicht wird, woraufhin der Befüllvorgang beendet wird.

Ein entsprechend ausgebildeter Kraftfahrzeugtank 10 bietet den Vorteil, dass zum Beenden des Befüllvorganges kein Druck innerhalb des Kraftfahrzeugtanks 10 aufgebaut werden muss, so dass nach Beenden des Befüllvorganges der Kraftstofftank 10 im Wesentlichen drucklos ist. Dadurch wird eine Beladung eines eventuell vorgesehenen Aktivkohlefilters 40 reduziert. Darüber hinaus ist auch die Bestimmung einer Kraftstoffmenge im Kraftfahrzeugtank 10 mit einer erhöhten Genauigkeit möglich, da aufgrund der unterbleibenden Druckbeaufschlagung des Kraftfahrzeugtanks 10 keine oder eine verminderte Deformation des Kraftfahrzeugtanks 10 erreicht wird.

Ferner kann der zumindest eine Aktuator 24 als ein Elektromagnet 24 ausgebildet sein, der im Einfüllstutzen 12 angeordnet ist. Der Elektromagnet 24 kann insbesondere in Form eines Ringmagneten 24 ausgebildet. Der Elektromagnet 24 ist dabei zwischen einem Aktivzustand und einem Passivzustand betätigbar, wobei im Aktivzustand der Elektromagnet 24 ein Magnetfeld erzeugt, und wobei der Elektromagnet 24 im Passivzustand kein Magnetfeld erzeugt.

Durch Übertragen eines Befüllstoppsignals von der Datenausgabeeinheit 63 der Tanksteuereinrichtung 60 an den Elektromagneten 24 wird dieser in dessen Passivzustand überführt, so dass kein Magnetfeld erzeugt wird und folglich ein in den Einfüllstutzen 12 eingeführtes Zapfventil 91 verschlossen wird. Ein entsprechend ausgebildeter Kraftfahrzeugtank 10 bietet den Vorteil, dass zum Beenden eines Befüllvorganges kein Druckaufbau innerhalb des Kraftfahrzeugtanks 10 notwendig ist, so dass zum einen ein optional bereitgestelltes Aktivkohlefilter 40 weniger stark beladen wird und darüber hinaus keine Deformation des Kraftfahrzeugtanks 10 durch Druckbeaufschlagung erfolgt, wodurch eine erhöhte Genauigkeit der Bestimmung eines Befüllzustandes des Kraftfahrzeugtanks 10 ermöglicht ist. Darüber hinaus bietet der Kraftfahrzeugtank 10 gemäß der fünften Ausführungsform den Vorteil, dass zum Beenden des Befüllvorganges noch nicht einmal das Einfüllrohr 11 mit Kraftstoff befüllt werden muss, so dass ein sehr zielgenauer Befüllstoppsignal erreichbar ist. Aus Figur 1 ist ersichtlich, dass der Kraftfahrzeugtank 10 ferner einen Neigungssensor 80 zum Bestimmen einer Neigung des Kraftfahrzeugtanks 10 umfasst. Der Neigungssensor 80 ist dabei mit der Tanksteuereinrichtung 60 über eine zweite Datenaustauschverbindung 102 in Form einer zweiten Datenleitung 102 verbunden, wobei die dritte Datenleitung 102 mit einer zweiten Empfangseinheit 64 der Tanksteuereinrichtung 60 verbunden ist. Der Neigungssensor 80 ist dazu ausgebildet, über die von diesem ermittelte und die Neigung des Kraftfahrzeugtanks 10 repräsentierende Daten an die Tanksteuereinrichtung 60 zu übertragen.

Die Tanksteuereinrichtung 60 ist dabei dazu ausgebildet, zusätzlich zu den vom Qualitäts- und Füllstandsensor 70 übertragenen Daten die von dem Neigungssensor 80 übertragenen Daten zu empfangen und einen Ist-Füllstand des Kraftfahrzeugtanks 10 unter Berücksichtigung der Daten des Qualitäts- und Füllstandsensor 70 und des Neigungssensors 80 zu ermitteln. Somit wird die Bestimmung des Füllstandes des Kraftfahrzeugtanks 10 nochmals präziser ermöglicht, da eine Schrägstellung des Kraftfahrzeugs und somit des Kraftfahrzeugtanks 10 berücksichtigt werden kann.

Der Kraftfahrzeugtank 10 muss zur Berücksichtigung einer Raumlage bzw. Neigung des Kraftfahrzeugtanks 10 nicht notwendigerweise den Neigungssensor 80 aufweisen, da üblicherweise in einer Bordelektronik eines Kraftfahrzeugs ein Neigungssensor vorhanden ist, dessen Daten in die zweite Datenempfangseinheit 64 der Tanksteuereinrichtung 60 übertragbar sind.

Bei dem in Figur 1 dargestellten Kraftfahrzeugtank 10 ist der Aktivkohlefilter 40 über ein Auslassventil 41 und eine Spülleitung 43 mit einem Ansaugtrakt 51 des Motors 50 fluidverbunden. Somit ist eine Spülung des Aktivkohlefilters 40 durch Ansaugluft des Motors 50 ermöglicht. Ferner ist aus Figur 1 ersichtlich, dass die Betriebsentlüftungsleitung 30 und die Betankungsentlüftungsleitung 31 über ein Drosselventil 42 mit dem Ansaugtrakt 51 des Motors 50 fluidverbunden sind. Somit ist es ermöglicht, unter Druck stehendes Gas aus dem Kraftstoffbehälter 10 direkt in den Ansaugtrakt 51 über das Drosselventil 42 und die Spülleitung 43 zu leiten, so dass das mit Kohlenwasserstoffen gesättigte Gas direkt zur Verbrennung innerhalb des Motors 50 verwendet werden kann.

Aus Figur 1 ist ferner ersichtlich, dass die Tanksteuereinrichtung 60 eine Signalsendeeinheit 61 zum drahtlosen Senden von Signalen an eine Befüllvorrichtung 90 aufweist. Somit ist es möglich, dass die Tanksteuereinrichtung 60 über die Signalsendeeinheit 61 an die Befüllvorrichtung 90 ein Tankstoppsignal sendet, woraufhin die Befüllvorrichtung 90 die Förderung der Betriebsflüssigkeit in den Betriebsflüssigkeitsbehälter 10 stoppt. Ferner ist es auch möglich, dass die Tanksteuereinrichtung 60 an die Befüllvorrichtung 90 eine einzufüllende Betriebsflüssigkeitsmenge sendet, woraufhin die Befüllvorrichtung 90 selbstständig die angeforderte Betriebsflüssigkeitsmenge in den Betriebsflüssigkeitsbehälter 10 fördert. Auch wird durch Übertragen von Daten von der Tanksteuereinrichtung 60 an die Befüllvorrichtung 90 ermöglicht, dass die Tanksteuereinrichtung 60 der Befüllvorrichtung 90 die Art der einzufüllenden Betriebsflüssigkeit mitteilt, worauf hin die Befüllvorrichtung die einzufüllender Betriebsflüssigkeit zusammenstellt. Dies ist besonders dann vorteilhaft, wenn die Befüllvorrichtung 90 lediglich ein einziges Zapfventil 91 aufweist, aus dem beispielsweise Kraftstoffsorten unterschiedlicher Qualität (z.B. unterschiedlicher Oktanzahlen) ausgebbar ist.

In Figur 2 ist eine Anzeigeeinrichtung 75 des erfindungsgemäßen Betriebsflüssigkeitsbehälter Systems schematisch dargestellt. Die Anzeigeeinrichtung 75 umfasst dabei einen Anzeigeelement 76 zum Anzeigen der sich in einem Kraftstoffbehälter 10 befindlichen Kraftstoffmenge. Ferner weist die Anzeigeeinrichtung 75 ein Anzeigeelement 77 zum Anzeigen der sich in einem Wasserbehälter befindlichen Wischwassermenge auf. Weiterhin weist die Anzeigeeinrichtung 75 ein Anzeigeelement 78 zum Anzeigen einer sich in einem Harnstoffbehälter befindlichen Harnstofflösungsmenge auf. Darüber hinaus weist die Anzeigeeinrichtung 75 auch eine Warnsignalanzeige 79 auf, mittels der ein Warnsignal visuell darstellbar ist.

Bei der in Figur 2 dargestellten Anzeigeeinrichtung 75 sind die Anzeigeelemente 76-79 als analoge Anzeigeinstrumente ausgebildet. Jedoch können die jeweiligen Anzeigeelemente auch in Form von beispielsweise Lichtlaufleisten ausgebildet sein. Ferner kann die Anzeigeeinrichtung im vom einer LCD/TFT-Anzeigeeinrichtung 75 ausgebildet sein. Beschränkungen hinsichtlich der Anzeigeeinrichtung von 70 bestehen insofern nicht.

Weiterhin können mittels der Anzeigeeinrichtung 75 die jeweiligen Qualitätseigenschaften der sich in dem Betriebsflüssigkeitsbehälter 10 befindlichen Betriebsflüssigkeit dargestellt werden.

### Bezugszeichenliste:

10 Betriebsflüssigkeitsbehälter / Kraftfahrzeugtank
11 Einfüllrohr (des Betriebsflüssigkeitsbehälters / Kraftfahrzeugtanks)
12 Einfüllstutzen
14 Betriebsflüssigkeitsfördereinrichtung / Kraftstofffördereinrichtung / Kraftstoffpumpe
15 Betriebsflüssigkeitsleitung / Kraftstoffleitung
16 Rezirkulationsleitung
20 Aktuator / Rückschlagventil
21 Aktuator / Betriebsentlüftungsventil
22 Aktuator / Betankungsentlüftungsventil
23 Aktuator / Absperrventil / FTIV (fuel tank isolation valve)
24 Aktuator / Elektromagnet (innerhalb des Einfüllstutzens)
25 Aktuator / Störkörper (innerhalb des Einfüllstutzens) 30 Betriebsentlüftungsleitung
31 Betankungsentlüftungsleitung
40 Aktivkohlefilter
41 Auslassventil / Purge-Ventil
42 Drosselventil
43 Spülleitung
44 Diagnoseventil / OBD-Ventil (on board diagnostiv Ventil)
50 Motor
51 Ansaugtrakt (des Motors)
60 Tanksteuereinrichtung / Tanksteuerungseinrichtung (des Betriebsflüssigkeitsbehälters / Kraftfahrzeugtanks)
61 Datensendeeinheit (der Tanksteuereinrichtung)
62 Datenempfangseinheit (der Tanksteuereinrichtung)
63 Datenausgabeeinheit
64 (zweite) Datenempfangseinheit (der Tanksteuereinrichtung)
70 Qualitäts- und/oder Füllstandsensor
75 Anzeigeeinrichtung
76 Anzeigeelement für Kraftstoffbehälter
77 Anzeigeelement für SCR-Behälter
78 Anzeigeelement für Wasserbehälter
79 Anzeigeelement für Warnsignal
80 Neigungssensor
90 Befüllvorrichtung / Zapfanlage
91 Zapfventil
92 Datenempfangseinrichtung (der Befüllvorrichtung)
100 Datenleitung
101 (erste) Datenaustauschverbindung / Signalleitung / elektrische Leitung
102 (zweite) Datenaustauschverbindung / Signalleitung / elektrische Leitung
G Gasvolumen (im Betriebsflüssigkeitsbehälter / Kraftfahrzeugtank)
K Betriebsflüssigkeit / Kraftstoff (im Betriebsflüssigkeitsbehälter / Kraftfahrzeugtank)

## Patentansprüche

1. Betriebsflüssigkeitsbehältersystem mit
- zumindest einem Betriebsflüssigkeitsbehälter (10),
- einem im Betriebsflüssigkeitsbehälter (10) angeordneten Qualitäts- und Füllstandsensor (70) zum Bestimmen von zumindest einer Qualitätseigenschaft der im Betriebsflüssigkeitsbehälter (10) befindlichen Betriebsflüssigkeit und eines Füllstandes des Betriebsflüssigkeitsbehälters (10), und
- einer Anzeigeeinrichtung (75), die in einer Tankmulde und/oder Tankklappe des Betriebsflüssigkeitsbehältersystems angeordnet ist,
wobei das Betriebsflüssigkeitsbehältersystem folgende Eigenschaften aufweist:
- die Anzeigeeinrichtung (75) ist mit dem Qualitäts- und Füllstandsensor (70) mittels einer Datenleitung (100) zum Übertragen von Daten von dem Qualitäts- und Füllstandsensor (70) zu der Anzeigeeinrichtung (75) verbunden, wobei die Daten zumindest eine Qualitätseigenschaft der sich im Betriebsflüssigkeitsbehälter (10) befindlichen Betriebsflüssigkeit und den Füllstand des Betriebsflüssigkeitsbehälter (10) repräsentieren; und
- die Anzeigeeinrichtung (75) ist dazu ausgebildet, die die zumindest eine Qualitätseigenschaft und den Füllstand repräsentierenden Daten darzustellen.

2. Betriebsflüssigkeitsbehältersystem nach Anspruch 1, **gekennzeichnet durch** die folgenden Merkmale:
- das Betriebsflüssigkeitsbehältersystem umfasst eine Tanksteuereinrichtung (60);
- die Tanksteuereinrichtung (60) ist mit dem Qualitäts- und Füllstandsensor (70) zum Empfangen der die zumindest eine Qualitätseigenschaft und den Füllstand repräsentierenden Daten mittels der Datenleitung (100) verbunden; und
- die Tanksteuereinrichtung (60) ist mittels der Datenleitung (100) mit der Anzeigeeinrichtung (75) zum Übertragen der die zumindest eine Qualitätseigenschaft und den Füllstand repräsentierenden Daten verbunden.

3. Betriebsflüssigkeitsbehältersystem nach Anspruch 2, **gekennzeichnet durch** die folgenden Merkmale:
- die Tanksteuereinrichtung (60) ist dazu ausgebildet, zusätzlich zu den von dem Qualitäts- und Füllstandsensor (70) übertragenen Daten weitere eine Neigung des Betriebsflüssigkeitsbehälters (10) repräsentierende Daten zu empfangen; und
- die Tanksteuereinrichtung (60) ist dazu ausgebildet, mittels der von dem Qualitäts- und Füllstandsensor (70) übertragenen Daten und der die Neigung des Betriebsflüssigkeitsbehälters (10) repräsentierenden Daten einen Ist-Füllstand zu ermitteln.

4. Betriebsflüssigkeitsbehältersystem nach Anspruch 3, **gekennzeichnet durch** die folgenden Merkmale:
- der Betriebsflüssigkeitsbehälter (10) umfasst einen Neigungssensor (80), mittels dem die Neigung des Betriebsflüssigkeitsbehälters (10) bestimmbar ist; und
- der Neigungssensor (80) ist mit der Tanksteuereinrichtung (60) über eine zweite Datenaustauschverbindung (102) verbunden, über die von dem Neigungssensor (80) ermittelte und die Neigung des Betriebsflüssigkeitsbehälters (10) repräsentierende Daten an die Tanksteuereinrichtung (60) übertragbar sind.

5. Betriebsflüssigkeitsbehältersystem nach einem der Ansprüche 2 bis 4, **dadurch gekennzeichnet, dass** die Tanksteuereinrichtung (60) dazu ausgebildet ist, bei Ermittlung einer Qualitätseigenschaft der im Betriebsflüssigkeitsbehälter (10) befindlichen Betriebsflüssigkeit, die eine vorbestimmte Qualitätsgrenze unterschreitet und/oder überschreitet, über eine Datenausgabeeinheit ein Warnsignal auszugeben.

6. Betriebsflüssigkeitsbehältersystem nach Anspruch 5, **dadurch gekennzeichnet, dass** die Tanksteuereinrichtung (60) dazu ausgebildet ist, das Warnsignal über die Datenleitung (100) an die Anzeigeeinrichtung (75) zu übertragen, woraufhin die Anzeigeeinrichtung (75) das Warnsignal darstellt.

7. Betriebsflüssigkeitsbehältersystem nach Anspruch 5 oder 6, **gekennzeichnet durch** die folgenden Merkmale:
- der Betriebsflüssigkeitsbehälter (10) umfasst zumindest einen elektrisch und/oder elektromagnetisch betätigbaren Aktuator (20, 21, 22, 23, 24, 25, 44), mittels dem ein Beenden eines Befüllvorganges des Betriebsflüssigkeitsbehälters (10) initiierbar ist;
- die Tanksteuereinrichtung (60) ist mit dem Aktuator (20, 21, 22, 23, 24, 25, 44) über eine Datenaustauschverbindung (101) verbunden;
- die Tanksteuereinrichtung (60) ist dazu ausgebildet, bei Ausgeben des Warnsignals an den Aktuator (20, 21, 22, 23, 24, 25, 44) ein Tankstoppsignal über die Datenaustauschverbindung (101) zu übertragen; und
- bei Empfang des Tankstoppsignals initiiert der Aktuator (20, 21, 22, 23, 24, 25, 44) das Beenden des Befüllvorganges.

8. Betriebsflüssigkeitsbehältersystem nach Anspruch 7, **gekennzeichnet durch** die folgenden Merkmale:
- der zumindest eine Aktuator (21, 22) ist als ein Betriebs- und/oder Betankungsentlüftungsventil (21, 22) ausgebildet, das im Kraftfahrzeugtank (10) angeordnet ist;
- das Betriebs- und/oder Betankungsentlüftungsventil (21, 22) ist elektrisch und/oder elektromagnetisch zwischen einer Offenstellung und einer Schließstellung betätigbar;
- in der Offenstellung des Betriebs- und/oder Betankungsentlüftungsventils (21, 22) ist der Kraftfahrzeugtank (10) mittels des Betriebs- und/oder Betankungsentlüftungsventils (21, 22) mit einer Entlüftungsleitung (30, 31) fluidverbunden; und
- in der Schließstellung des Betriebs- und/oder Betankungsentlüftungsventils (21, 22) ist des Kraftfahrzeugtank (10) von der Entlüftungsleitung (30, 31) mittels des Betriebs- und/oder Betankungsentlüftungsventils (21, 22) fluidgetrennt.

9. Betriebsflüssigkeitsbehältersystem nach einem der Ansprüche 7 bis 8, **gekennzeichnet durch** die folgenden Merkmale:
- der zumindest eine Aktuator (20) ist als ein Rückschlagventil (20) ausgebildet, das in einem in den Kraftfahrzeugtank (10) mündenden Einfüllrohr (11) angeordnet ist;
- das Rückschlagventil (20) ist elektrisch und/oder elektromagnetisch zwischen einer Offenstellung und einer Schließstellung betätigbar;
- in der Offenstellung des Rückschlagventils (20) ist der Kraftfahrzeugtank (10) mit dem Einfüllrohr (11) fluidverbunden;
- in der Schließstellung des Rückschlagventils (20) ist der Kraftfahrzeugtank (10) von dem Einfüllrohr (11) mittels des Rückschlagventils (20) fluidgetrennt oder die lichte Weite des Einfüllrohrs (11) ist mittels des Rückschlagventils (20) reduziert.

10. Betriebsflüssigkeitsbehältersystem nach einem der Ansprüche 7 bis 9, **gekennzeichnet durch** die folgenden Merkmale:
- der zumindest eine Aktuator (25) ist als ein Störkörper (25) ausgebildet, der in einem in den Kraftfahrzeugtank (10) mündenden Einfüllrohr (11) angeordnet ist;
- der Störkörper (25) ist elektrisch und/oder elektromagnetisch zwischen einer Offenstellung und einer Störstellung betätigbar;
- in der Offenstellung des Störkörpers (25) ist eine lichte Weite des Einfüllrohres (11) nicht reduziert; und
- in der Störstellung des Störkörpers (25) ragt dieser in das Einfüllrohr (11) und reduziert die lichte Weite des Einfüllrohrs (11).

11. Betriebsflüssigkeitsbehältersystem nach einem der Ansprüche 7 bis 10, **gekennzeichnet durch** die folgenden Merkmale:
- der zumindest eine Aktuator (23) ist als Absperrventil (23) ausgebildet, das zwischen dem Kraftfahrzeugtank (10) und einem Aktivkohlefilter (40) angeordnet ist;
- das Absperrventil (23) ist elektrisch und/oder elektromagnetisch zwischen einer Offenstellung und einer Schließstellung betätigbar;
- in der Offenstellung des Absperrventils (23) ist der Kraftfahrzeugtank (10) mittels des Absperrventils (23) mit dem Aktivkohlefilter (40) fluidverbunden; und
- in der Schließstellung des Absperrventils (23) ist der Kraftfahrzeugtank (10) von dem Aktivkohlefilter (40) mittels des Absperrventils (23) fluidgetrennt.

12. Betriebsflüssigkeitsbehältersystem nach einem der Ansprüche 7 bis 11, **gekennzeichnet durch** die folgenden Merkmale:
- der zumindest eine Aktuator (24) ist als ein Elektromagnet (24) ausgebildet, der in einem Einfüllstutzen (12) eines in den Kraftfahrzeugtank (10) mündenden Einfüllrohrs (11) angeordnet ist;
- der Elektromagnet (24) ist zwischen einem Aktivzustand und einem Passivzustand betätigbar;
- im Aktivzustand erzeugt der Elektromagnet (24) ein Magnetfeld; und
- im Passivzustand erzeugt der Elektromagnet (24) kein Magnetfeld.

13. Betriebsflüssigkeitsbehältersystem nach einem der Ansprüche 2 bis 12, **dadurch gekennzeichnet, dass** die Tanksteuereinrichtung (60) eine Signalsendeeinheit (61) zum drahtlosen Senden von Signalen an eine Befüllvorrichtung (90, 92) aufweist.

14. Betriebsflüssigkeitsbehältersystem nach einem der Ansprüche 2 bis 13, **gekennzeichnet durch** die folgenden Merkmale:
- die Tanksteuereinrichtung (60) ist dazu ausgebildet, vor einem Befüllvorgang die Konzentration einer Qualitätseigenschaft und die Betriebsflüssigkeitsmenge der sich im Betriebsflüssigkeitsbehälter (10) befindlichen Betriebsflüssigkeitsmenge zu ermitteln;
- die Tanksteuereinrichtung (60) ist ferner dazu ausgebildet, nach einem Befüllvorgang die Konzentration einer Qualitätseigenschaft und die Betriebsflüssigkeitsmenge der sich im Betriebsflüssigkeitsbehälter befindlichen Betriebsflüssigkeitsmenge zu ermitteln;
- die Tanksteuereinrichtung (60) ist dazu ausgebildet, die Konzentration einer Qualitätseigenschaft der eingefüllten Betriebsflüssigkeit dadurch zu errechnen, dass der Quotient des Produktes der Konzentration der Qualitätseigenschaft vor dem Befüllvorgang mit der Betriebsflüssigkeitsmenge vor dem Befüllvorgang mit der Betriebsflüssigkeitsmenge nach dem Befüllvorgang gebildet wird.

## Claims

1. Operating fluid container system comprising
- at least one operating fluid container (10),
- a quality and fill level sensor (70) arranged in the operating fluid container (10) for determining at least one quality property of the operating fluid located in the operating fluid container (10) and a fill level of the operating fluid container (10), and
- a display device (75) which is arranged in a container recess and/or container flap of the operating fluid container system,
wherein the operating fluid container system has the following properties:
- the display device (75) is connected to the quality and fill level sensor (70) by means of a data line (100) for transmitting data from the quality and fill level sensor (70) to the display device (75), wherein the data represent at least one quality property of the operating fluid located in the operating fluid container (10) and the fill level of the operating fluid container (10); and
- the display device (75) is designed to display the data representing the at least one quality property and the fill level.

2. Operating fluid container system according to claim 1, **characterized by** the following features:
- the operating fluid container system comprises a container control device (60);
- the container control device (60) is connected to the quality and fill level sensor (70) by means of the data line (100) in order to receive the data representing the at least one quality property and the fill level; and
- the container control device (60) is connected to the display device (75) by means of the data line (100) in order to transmit the data representing the at least one quality property and the fill level.

3. Operating fluid container system according to claim 2, **characterized by** the following features:
- the container control device (60) is designed to receive, in addition to the data transmitted by the quality and fill level sensor (70), further data representing an inclination of the operating fluid container (10); and
- the container control device (60) is designed to determine an actual fill level using the data transmitted by the quality and fill level sensor (70) and the data representing the inclination of the operating fluid container (10).

4. Operating fluid container system according to claim 3, **characterized by** the following features:
- the operating fluid container (10) comprises an inclination sensor (80) by means of which the inclination of the operating fluid container (10) can be determined; and
- the inclination sensor (80) is connected to the container control device (60) via a second data exchange connection (102) via which data determined by the inclination sensor (80) and representing the inclination of the operating fluid container (10) can be transmitted to the container control device (60).

5. Operating fluid container system according to any of claims 2 to 4, **characterized in that** the container control device (60) is designed to output a warning signal via a data output unit when a quality property of the operating fluid located in the operating fluid container (10) is determined which falls below and/or exceeds a predetermined quality limit.

6. Operating fluid container system according to claim 5, **characterized in that** the container control device (60) is designed to transmit the warning signal to the display device (75) via the data line (100), whereupon the display device (75) displays the warning signal.

7. Operating fluid container system according to either claim 5 or claim 6, **characterized by** the following features:
- the operating fluid container (10) comprises at least one electrically and/or electromagnetically actuatable actuator (20, 21, 22, 23, 24, 25, 44), by means of which a termination of a filling process of the operating fluid container (10) can be initiated;
- the container control device (60) is connected to the actuator (20, 21, 22, 23, 24, 25, 44) via a data exchange connection (101);
- the container control device (60) is designed to transmit a container stop signal via the data exchange connection (101) when the warning signal is output to the actuator (20, 21, 22, 23, 24, 25, 44); and
- upon receipt of the container stop signal, the actuator (20, 21, 22, 23, 24, 25, 44) initiates the termination of the filling process.

8. Operating fluid container system according to claim 7, **characterized by** the following features:
- the at least one actuator (21, 22) is designed as an operating and/or refueling vent valve (21, 22) which is arranged in the motor vehicle tank (10);
- the operating and/or refueling vent valve (21, 22) can be actuated electrically and/or electromagnetically between an open position and a closed position;
- in the open position of the operating and/or refueling vent valve (21, 22), the motor vehicle tank (10) is fluidically connected to a vent line (30, 31) by means of the operating and/or refueling vent valve (21, 22); and
- in the closed position of the operating and/or refueling vent valve (21, 22), the motor vehicle tank (10) is fluidically separated from the vent line (30, 31) by means of the operating and/or refueling vent valve (21, 22).

9. Operating fluid container system according to any of claims 7 to 8, **characterized by** the following features:
- the at least one actuator (20) is designed as a check valve (20) which is arranged in a filler pipe (11) opening into the motor vehicle tank (10);
- the check valve (20) can be actuated electrically and/or electromagnetically between an open position and a closed position;
- in the open position of the check valve (20), the motor vehicle tank (10) is fluidically connected to the filler pipe (11);
- in the closed position of the check valve (20), the motor vehicle tank (10) is fluidically separated from the filler pipe (11) by means of the check valve (20) or the inner diameter of the filler pipe (11) is reduced by means of the check valve (20).

10. Operating fluid container system according to any of claims 7 to 9, **characterized by** the following features:
- the at least one actuator (25) is designed as an obstruction body (25) which is arranged in a filler pipe (11) opening into the motor vehicle tank (10);
- the obstruction body (25) can be actuated electrically and/or electromagnetically between an open position and an obstruction position;
- in the open position of the obstruction body (25), an inner diameter of the filler pipe (11) is not reduced; and
- in the obstruction position (25) of the obstruction body, said body protrudes into the filler pipe (11) and reduces the inner diameter of the filler pipe (11).

11. Operating fluid container system according to any of claims 7 to 10, **characterized by** the following features:
- the at least one actuator (23) is designed as a shut-off valve (23) which is arranged between the motor vehicle tank (10) and an activated carbon filter (40);
- the shut-off valve (23) can be actuated electrically and/or electromagnetically between an open position and a closed position;
- in the open position of the shut-off valve (23), the motor vehicle tank (10) is fluidically connected to the activated carbon filter (40) by means of the shut-off valve (23); and
- in the closed position of the shut-off valve (23), the motor vehicle tank (10) is fluidically separated from the activated carbon filter (40) by means of the shut-off valve (23).

12. Operating fluid container system according to any of claims 7 to 11, **characterized by** the following features:
- the at least one actuator (24) is designed as an electromagnet (24) which is arranged in a filler neck (12) of a filler pipe (11) opening into the motor vehicle tank (10);
- the electromagnet (24) can be actuated between an active state and a passive state;
- in the active state, the electromagnet (24) generates a magnetic field; and
- in the passive state, the electromagnet (24) does not generate a magnetic field.

13. Operating fluid container system according to any of claims 2 to 12, **characterized in that** the container control device (60) has a signal transmission unit (61) for wireless transmission of signals to a filling apparatus (90, 92).

14. Operating fluid container system according to any of claims 2 to 13, **characterized by** the following features:
- the container control device (60) is designed to determine the concentration of a quality property and the operating fluid quantity of the operating fluid quantity located in the operating fluid container (10) before a filling process;
- the container control device (60) is further designed to determine the concentration of a quality property and the operating fluid quantity of the operating fluid quantity located in the operating fluid container after a filling process;
- the container control device (60) is designed to calculate the concentration of a quality property of the filled-in operating fluid by forming the quotient of the product of the concentration of the quality property before the filling process with the operating fluid quantity before the filling process with the operating fluid quantity after the filling process.

## Revendications

1. Système de conteneur de fluide de fonctionnement comportant
- au moins un conteneur de fluide de fonctionnement (10),
- un capteur de qualité et de niveau de remplissage (70) disposé dans le conteneur de fluide de fonctionnement (10) afin de définir au moins une caractéristique de qualité du fluide de fonctionnement se trouvant dans le conteneur de fluide de fonctionnement (10) et un niveau de remplissage du conteneur de fluide de fonctionnement (10), et
- un dispositif d'affichage (75) qui est disposé dans un bac de réservoir et/ou un abattant de réservoir du système de conteneur de fluide de fonctionnement,
le système de conteneur de fluide de fonctionnement présentant les caractéristiques suivantes :
- le dispositif d'affichage (75) est relié au capteur de qualité et de niveau de remplissage (70) au moyen d'une ligne de données (100) afin de transmettre des données du capteur de qualité et de niveau de remplissage (70) au dispositif d'affichage (75), les données représentant au moins une caractéristique de qualité du fluide de fonctionnement se trouvant dans le conteneur de fluide de fonctionnement (10) et le niveau de remplissage du conteneur de fluide de fonctionnement (10) ; et
- le dispositif d'affichage (75) est conçu pour présenter les données représentant l'au moins une caractéristique de qualité et le niveau de remplissage.

2. Système de conteneur de fluide de fonctionnement selon la revendication 1, **caractérisé par** les caractéristiques suivantes :
- le système de conteneur de fluide de fonctionnement comprend un dispositif de commande de réservoir (60) ;
- le dispositif de commande de réservoir (60) est relié au capteur de qualité et de niveau de remplissage (70) au moyen de la ligne de données (100) afin de recevoir les données représentant l'au moins une caractéristique de qualité et le niveau de remplissage ; et
- le dispositif de commande de réservoir (60) est relié au dispositif d'affichage (75) au moyen de la ligne de données (100) afin de transmettre les données représentant l'au moins une caractéristique de qualité et le niveau de remplissage.

3. Système de conteneur de fluide de fonctionnement selon la revendication 2, **caractérisé par** les caractéristiques suivantes :
- le dispositif de commande de réservoir (60) est conçu pour recevoir, en plus des données transmises par le capteur de qualité et de niveau de remplissage (70), d'autres données représentant une inclinaison du conteneur de fluide de fonctionnement (10) ; et
- le dispositif de commande de réservoir (60) est conçu pour déterminer un niveau de remplissage réel au moyen des données transmises par le capteur de qualité et de niveau de remplissage (70) et des données représentant l'inclinaison du conteneur de fluide de fonctionnement (10).

4. Système de conteneur de fluide de fonctionnement selon la revendication 3, **caractérisé par** les caractéristiques suivantes :
- le conteneur de fluide de fonctionnement (10) comprend un capteur d'inclinaison (80) au moyen duquel l'inclinaison du conteneur de fluide de fonctionnement (10) peut être définie ; et
- le capteur d'inclinaison (80) est relié au dispositif de commande de réservoir (60) par l'intermédiaire d'une seconde liaison d'échange de données (102) par l'intermédiaire de laquelle les données déterminées par le capteur d'inclinaison (80) et représentant l'inclinaison du conteneur de fluide de fonctionnement (10) peuvent être transmises au dispositif de commande de réservoir (60).

5. Système de conteneur de fluide de fonctionnement selon l'une des revendications 2 à 4, **caractérisé en ce que** le dispositif de commande de réservoir (60) est conçu pour émettre un signal d'avertissement par l'intermédiaire d'une unité d'émission de données lors de la détermination d'une caractéristique de qualité du fluide de fonctionnement se trouvant dans le conteneur de fluide de fonctionnement (10), laquelle caractéristique de qualité est en dessous et/ou au-dessus d'une limite de qualité prédéfinie.

6. Système de conteneur de fluide de fonctionnement selon la revendication 5, **caractérisé en ce que** le dispositif de commande de réservoir (60) est conçu pour transmettre le signal d'avertissement au dispositif d'affichage (75) par l'intermédiaire de la ligne de données (100), après quoi le dispositif d'affichage (75) présente le signal d'avertissement.

7. Système de conteneur de fluide de fonctionnement selon la revendication 5 ou 6, **caractérisé par** les caractéristiques suivantes :
- le conteneur de fluide de fonctionnement (10) comprend au moins un actionneur (20, 21, 22, 23, 24, 25, 44) actionné de manière électrique et/ou électromagnétique, permettant d'initier un arrêt d'un processus de remplissage du conteneur de fluide de fonctionnement (10) ;
- le dispositif de commande de réservoir (60) est relié à l'actionneur (20, 21, 22, 23, 24, 25, 44) par l'intermédiaire d'une liaison d'échange de données (101) ;
- le dispositif de commande de réservoir (60) est conçu pour transmettre un signal d'interruption de réservoir à l'actionneur (20, 21, 22, 23, 24, 25, 44) par l'intermédiaire de la liaison d'échange de données (101) lors de l'émission du signal d'avertissement ; et
- l'actionneur (20, 21, 22, 23, 24, 25, 44) initie l'arrêt du processus de remplissage lors de la réception du signal d'interruption de réservoir.

8. Système de conteneur de fluide de fonctionnement selon la revendication 7, **caractérisé par** les caractéristiques suivantes :
- l'au moins un actionneur (21, 22) est conçu comme une soupape de ventilation de fonctionnement et/ou de ravitaillement (21, 22) qui est disposée dans le réservoir de véhicule automobile (10) ;
- la soupape de ventilation de fonctionnement et/ou de ravitaillement (21, 22) peut être actionnée de manière électrique et/ou électromagnétique entre une position ouverte et une position fermée ;
- dans la position ouverte de la soupape de ventilation de fonctionnement et/ou de ravitaillement (21, 22), le réservoir de véhicule automobile (10) est relié fluidiquement à une conduite de ventilation (30, 31) au moyen de la soupape de ventilation de fonctionnement et/ou de ravitaillement (21, 22) ; et
- dans la position fermée de la soupape de ventilation de fonctionnement et/ou de ravitaillement (21, 22), le réservoir de véhicule automobile (10) est séparé fluidiquement de la conduite de ventilation (30, 31) au moyen de la soupape de ventilation de fonctionnement et/ou de ravitaillement (21, 22).

9. Système de conteneur de fluide de fonctionnement selon l'une des revendications 7 à 8, **caractérisé par** les caractéristiques suivantes :
- l'au moins un actionneur (20) est conçu sous la forme d'une soupape anti-retour (20) qui est disposée dans un tuyau de remplissage (11) débouchant dans le réservoir (10) du véhicule automobile ;
- la soupape anti-retour (20) peut être actionnée de manière électrique et/ou électromagnétique entre une position ouverte et une position fermée ;
- dans la position ouverte de la soupape anti-retour (20), le réservoir de véhicule automobile (10) est relié fluidiquement au tuyau de remplissage (11) ;
- dans la position fermée de la soupape anti-retour (20), le réservoir de véhicule automobile (10) est séparé fluidiquement du tuyau de remplissage (11) au moyen de la soupape anti-retour (20) ou le diamètre libre du tuyau de remplissage (11) est réduit au moyen de la soupape anti-retour (20).

10. Système de conteneur de fluide de fonctionnement selon l'une des revendications 7 à 9, **caractérisé par** les caractéristiques suivantes :
- l'au moins un actionneur (25) est conçu comme un corps perturbateur (25) qui est disposé dans un tuyau de remplissage (11) débouchant dans le réservoir de véhicule automobile (10) ;
- le corps perturbateur (25) peut être actionné de manière électrique et/ou électromagnétique entre une position ouverte et une position perturbée ;
- dans la position ouverte du corps perturbateur (25), un diamètre libre du tuyau de remplissage (11) n'est pas réduit ; et
- dans la position perturbée du corps perturbateur (25), ce dernier fait saillie dans le tuyau de remplissage (11) et réduit le diamètre libre du tuyau de remplissage (11).

11. Système de conteneur de fluide de fonctionnement selon l'une des revendications 7 à 10, **caractérisé par** les caractéristiques suivantes :
- l'au moins un actionneur (23) est conçu comme une soupape d'arrêt (23) qui est disposée entre le réservoir de véhicule automobile (10) et un filtre à charbon actif (40) ;
- la soupape d'arrêt (23) peut être actionnée de manière électrique et/ou électromagnétique entre une position ouverte et une position fermée ;
- dans la position ouverte de la soupape d'arrêt (23), le réservoir de véhicule automobile (10) est relié fluidiquement au filtre à charbon actif (40) au moyen de la soupape d'arrêt (23) ; et
- dans la position fermée de la soupape d'arrêt (23), le réservoir de véhicule automobile (10) est séparé fluidiquement du filtre à charbon actif (40) au moyen de la soupape d'arrêt (23).

12. Système de conteneur de fluide de fonctionnement selon l'une des revendications 7 à 11, **caractérisé par** les caractéristiques suivantes :
- l'au moins un actionneur (24) est conçu comme un électroaimant (24) qui est disposé dans un embout de remplissage (12) d'un tuyau de remplissage (11) débouchant dans le réservoir de véhicule automobile (10) ;
- l'électroaimant (24) peut être actionné entre un état actif et un état passif ;
- à l'état actif, l'électroaimant (24) génère un champ magnétique ; et
- à l'état passif, l'électroaimant (24) ne génère pas de champ magnétique.

13. Système de conteneur de fluide de fonctionnement selon l'une des revendications 2 à 12, **caractérisé en ce que** le dispositif de commande de réservoir (60) présente une unité d'envoi de signaux (61) destinée à l'envoi sans fil de signaux à un moyen de remplissage (90, 92).

14. Système de conteneur de fluide de fonctionnement selon l'une des revendications 2 à 13, **caractérisé par** les caractéristiques suivantes :
- le dispositif de commande de réservoir (60) est conçu pour déterminer la concentration d'une caractéristique de qualité et la quantité de fluide de fonctionnement de la quantité de fluide de fonctionnement dans le conteneur de fluide de fonctionnement (10) avant un processus de remplissage ;
- le dispositif de commande de réservoir (60) est également conçu pour déterminer la concentration d'une caractéristique de qualité et la quantité de fluide de fonctionnement de la quantité de fluide de fonctionnement se trouvant dans le conteneur de fluide de fonctionnement après un processus de remplissage ;
- le dispositif de commande de réservoir (60) est conçu pour calculer la concentration d'une caractéristique de qualité du fluide de fonctionnement rempli, en formant le quotient du produit de la concentration de la caractéristique de qualité avant le processus de remplissage et de la quantité de fluide de fonctionnement avant le processus de remplissage et de la quantité de fluide de fonctionnement après le processus de remplissage.
